# EUROPÄISCHE PATENTSCHRIFT

(11) **EP 1 282 293 B1**
(45) Veröffentlichungstag und Bekanntmachung des Hinweises auf die Patenterteilung: **21.09.2005**
(21) Anmeldenummer: 01118282.1
(22) Anmeldetag: 30.07.2001
(51) Int. Cl.: H04M 3/42, G08B 15/00, G08B 25/00, H04M 11/00

(54) **Verfahren zur Rufbearbeitung in einem Telekommunikationsnetz sowie zugehörige Einheiten**
Method and apparatus for treatment of calls in a telecommunication network and its related units
Procédé et dispositif pour le traitement d'appels dans un réseau de télécommunication et ses units liées

(43) Veröffentlichungstag der Anmeldung: 05.02.2003
(73) Patentinhaber: SIEMENS AKTIENGESELLSCHAFT, 80333 München (DE)
(72) Erfinder: Van den Berghe, Rik, 8470 Gistel (DE)

(56) Entgegenhaltungen:
- DE-A- 3 743 524
- DE-A- 19 543 380
- DE-A- 19 610 420
- FR-A- 2 574 607
- US-A- 3 746 790

## Beschreibung

Die Erfindung betrifft ein Verfahren zur Rufbearbeitung in einem Telekommunikationsnetz,
- bei dem für einen Teilnehmeranschluss eines Teilnehmers eine sich von der Normalbetriebsart des Teilnehmeranschlusses unterscheidende Simulationsbetriebsart ausgewählt wird und
- bei dem bei einem ankommenden Ruf aus mehreren Reaktionsmöglichkeiten eine Reaktionsmöglichkeit gemäß einer automatischen Auswahlfunktion ausgewählt wird, um eine Nutzung des Teilnehmeranschlusses durch den Teilnehmer zu simulieren.

Ist beispielsweise ein an einem analogen Teilnehmeranschluss betriebenes Endgerät bereits besetzt, so ist ein weiterer Rufaufbau zu diesem Endgerät nicht möglich. Ist das Endgerät frei, so hängt die weitere Rufbearbeitung von den Einstellungen am Endgerät ab. Beispielsweise wird das Erzeugen von Ruftönen zum rufenden Teilnehmer hin und das Erzeugen eines Rufsignals durch das Endgerät veranlasst. Es lässt sich auch ein Anrufbeantworter einschalten. Andere vermittlungstechnische Reaktionsmöglichkeiten sind eine automatische Rufumleitung zu einem anderen Endgerät des Telekommunikationsnetzes, z.B. zu einer automatischen Sprachaufzeichnungseinheit oder zu einem anderen Endgerät des gerufenen Teilnehmers oder eines anderen Teilnehmers.

Das Telekommunikationsnetz ist beispielsweise ein durchschaltevermitteltes Telekommunikationsnetz, bei dem Sprachkanäle während der Dauer einer Verbindung verschaltet sind. Ein Beispiel für ein solches Telekommunikationsnetz ist das Telekommunikationsnetz der Deutschen Telekom AG. Ein anderes Beispiel für ein Telekommunikationsnetz ist ein paketübertragendes Netz, beispielsweise das Internet. Zur Sprachdatenübertragung in Echtzeit werden standardisierte Verfahren eingesetzt, z.B. das Verfahren VoIP (Voice over Internet Protocol). Es werden aber auch Netze eingesetzt, in denen die Sprachdaten abschnittsweise durchschaltevermittelt und an anderen Abschnitten in Datenpaketen übertragen werden.

Die Tatsache, dass ankommende Rufe während einer bestimmten Zeitdauer unbeantwortet bleiben, lässt Rückschlüsse darauf zu, ob ein Teilnehmer an seinem Wohnort anwesend oder abwesend ist. Ist bei Anrufen eines Teilnehmeranschlusses über eine längere Zeit, beispielsweise mehrere Tage oder Wochen, für den anrufenden Teilnehmer immer nur ein Rufton hörbar, so ist davon auszugehen, dass der gerufene Teilnehmer abwesend ist. Somit besteht die Gefahr, dass die Abwesenheit eines Teilnehmers von der Seite eines Telekommunikationsnetzes her durch andere Teilnehmer festgestellt wird.

Aus der US 3,764,790, "Automatic telephone interface device", vom 17. Juli 1973 ist dazu ein Gerät bekannt, welches geeignet ist, Anrufe nach einer vorgebbaren Zeit anzunehmen und zu halten, um einen Anruf ohne Hast annehmen zu können und auch Umgebungsgeräusche zu simulieren, um die Anwesenheit des Gerufenen in dessen Abwesenheit vorzutäuschen. Dabei wird die Lade- und Entladerate eines Speicherelements dazu benützt, die Verbindung zu schalten beziehungsweise auch wieder zu trennen. Bei einer weiteren Ausführungsform ist auch die Anschaltung externer Geräte möglich.

Die DE 196 10 420, "Lichtschalter zur Anwesenheitssimulation", vom 18.9.1997, beschreibt darüber hinaus einen Lichtschalter, der in einer Betreibsart "Schalten" wie ein herkömmlicher Lichtschalter zu bedienen ist und in den Betriebsarten "Zufall" und/oder "Wiedergabe" automatisch Schaltungen ausführt, um die Anwesenheit eines Anwenders zu simulieren. Durch Speicherung der Betriebsart und des Schaltzustandes in einem nichtflüchtigen Speicherelement bleiben diese Informationen auch bei Ausfall der Netzspannung erhalten.

Es ist Aufgabe der Erfindung, ein einfaches Verfahren zur Rufbearbeitung anzugeben, welches noch besser gewährleistet, dass sich die Nichtbenutzung des Teilnehmeranschlusses und damit die Abwesenheit eines Teilnehmers nicht mehr ohne weiteres von der Seite des Telekommunikationsnetzes her durch andere Teilnehmer feststellen lässt. Außerdem sollen eine zugehörige Vorrichtung, eine zugehörige Vermittlungsstelle, eine zugehörige Telekommunikationsanlage, ein zugehöriges Endgerät und ein zugehöriges Programm angegeben werden.

Die auf das Verfahren bezogene Aufgabe wird durch ein Verfahren der eingangs genannten Art gelöst bei dem folgende Reaktionsmöglichkeiten alternativ eingesetzt werden:
- Erzeugen eines Besetzttones, der dem rufenden Teilnehmer signalisiert, dass das gerufene Endgerät bereits in eine Telekommunikationsverbindung einbezogen ist. Der Besetztton wird dabei erzeugt, ohne dass tatsächlich eine Verbindung zwischen dem gerufenen Endgerät und einem anderen Endgerät besteht. Der Aufbau einer Verbindung wäre nur dann möglich, wenn der Teilnehmer das Endgerät bedient. Deshalb wird der Besetztzustand dem rufenden Teilnehmer nur vorgetäuscht.
- Erzeugen eines Ruftones, der dem rufenden Teilnehmer signalisiert, dass der gerufene Teilnehmer über eine Signaleinrichtung am gerufenen Endgerät gerufen wird, unabhängig davon, ob am Endgerät des gerufenen Teilnehmers ein Signalton erzeugt wird oder nicht. Die Signaleinrichtung ist üblicherweise ein Lautsprecher, der einen Klingelton ausgibt. Bei einer Ausgestaltung wird der Rufton erzeugt, ohne dass die Signaleinrichtung angesteuert wird. Alternativ lässt sich die Signaleinrichtung jedoch auch tatsächlich ansteuern. Das Erzeugen eines Signals mit der Signaleinrichtung ist üblicherweise noch nicht zu vergebühren.
- Umleiten des ankommenden Rufes zu einem anderen Teilnehmeranschluss.
- Umleiten des ankommenden Rufes zu einem Endgerät, das zum Erbringen der Simulationsbetriebsart für mehrere Endgeräte verschiedener Teilnehmer genutzt wird. An dem Endgerät, zu dem der Ruf umgeleitet wird, sitzt beispielsweise eine Bedienperson, die sich mit einem "Hallo" meldet. Der rufende Teilnehmer wird sofort auflegen, wenn er andere Absichten hatte, als den Wunsch, ein Gespräch aufzubauen. Von weiteren "Untersuchungen" des Teilnehmeranschlusses wird der rufende Teilnehmer absehen, um beispielsweise eine Rückverfolgung zu verhindern.

Die Erfindung geht von der Überlegung aus, dass sich die Nichtbenutzung eines Teilnehmeranschlusses und damit Abwesenheit eines Teilnehmers dann nicht von der Seite des Telekommunikationsnetzes her feststellen lässt, wenn die Anwesenheit des Teilnehmers unter Einbeziehung einer automatischen Auswahlfunktion simuliert wird. Durch die Simulation werden dem rufenden Teilnehmer vermittlungstechnische Signale zugeleitet, die einen Rückschluss auf die Nutzung des Teilnehmeranschlusses und damit auf die Abwesenheit desjenigen Teilnehmers erschweren, der seine Abwesenheit verbergen möchte.

Bei dem erfindungsgemäßen Verfahren wird für das Endgerät desjenigen Teilnehmers, der seine Abwesenheit verbergen möchte, eine sich von der Normalbetriebsart dieses Endgerätes unterscheidende Simulationsbetriebsart ausgewählt. Die Simulationsbetriebsart lässt sich beispielsweise durch das Betätigen eines Schalters, durch das Wählen einer bestimmten Rufnummer oder auf eine andere Art auswählen.

Für die Simulationsbetriebsart werden mehrere vermittlungstechnische Reaktionsmöglichkeiten bei ankommenden Rufen vorgegeben, beispielsweise das Erzeugen eines Freizeichens oder das Erzeugen eines Besetzttones. Für die ankommenden Rufe werden die Reaktionsmöglichkeiten gemäß der automatischen Auswahlfunktion unabhängig vom vermittlungstechnischen Zustand am Teilnehmeranschluss ausgewählt. Aufgrund dieser Auswahl der Reaktionsmöglichkeiten wird für den rufenden Teilnehmer eine Nutzung des Endgerätes des gerufenen Teilnehmers simuliert.

Ein rufender Teilnehmer kann so auch bei mehreren aufeinanderfolgenden Anrufen zu dem Endgerät desjenigen Teilnehmers, dessen Abwesenheit verborgen bleiben soll, nicht mit Sicherheit sagen kann, ob der Teilnehmer anwesend oder abwesend ist. Unter solchen Umständen werden sich Teilnehmer mit anderen Absichten als dem Wunsch nach einem Gesprächsaufbau eher an solche Teilnehmer halten, deren Abwesenheit sich einfacher bestimmen lässt, d.h. an Teilnehmer, die während ihrer Abwesenheit das Leistungsmerkmal "Simulationsbetriebsart" nicht nutzen.

Bei einer Weiterbildung des erfindungsgemäßen Verfahrens wird die Auswahlfunktion aufgrund der tatsächlichen Nutzung des Endgerätes durch den Teilnehmer festgelegt. Die Art der Nutzung der Endgeräte verschiedener Teilnehmer unterscheidet sich üblicherweise. Damit unterscheiden sich auch die Auswahlfunktionen für verschiedene Teilnehmer voneinander. Durch das Verwenden verschiedener Auswahlfunktionen wird es dem rufenden Teilnehmer erschwert, festzustellen, ob die Simulationsbetriebsart oder ob die Normalbetriebsart wirksam ist.

Bei einer nächsten Weiterbildung des erfindungsgemäßen Verfahrens werden die erfindungsgemäßen Verfahrensschritte in einer Vermittlungsstelle ausgeführt. Eine Vermittlungsstelle dient dem gebührenpflichtigen Vermitteln von Verbindungen für eine Vielzahl von Teilnehmern. Beispiele für Vermittlungsstellen sind Vermittlungsstellen vom Typ EWSD (elektronisch gesteuertes digitales Wählsystem - eingetragener Markename der Firma Siemens AG) oder vom Typ S12 (eingetragener Markename der Firma Alcatel AG). Wird das erfindungsgemäße Verfahren in einer Vermittlungsstelle ausgeführt, so lassen sich Programme oder Programmbestandteile sowie Hardwarekomponenten für das Erbringen der Simulationsbetriebsart für verschiedene Teilnehmer mehrfach nutzen. Das Leistungsmerkmal Simulationsbetriebsart kann dadurch mit geringem Aufwand für eine Vielzahl von Teilnehmeranschlüssen realisiert werden. Die Teilnehmer können ihre bisher genutzten Endgeräte unverändert weiterbenutzen, d.h. sie benötigen keine neuen Endgeräte.

Bei einer alternativen Weiterbildung wird das erfindungsgemäße Verfahren in einer Telekommunikationsanlage ausgeführt. Telekommunikationsanlagen dienen dem gebührenfreien Vermitteln von Verbindungen zwischen Endgeräten, die üblicherweise innerhalb des Privatgeländes des Betreibers der Telekommunikationsanlage angeschlossen sind. Für die Telekommunikationsanlage gelten die für die Vermittlungsstelle genannten Vorteile ebenfalls.

Bei einer dritten Alternative wird das erfindungsgemäße Verfahren im Endgerät eines Teilnehmers ausgeführt. Durch diese Maßnahme lassen sich herkömmliche Vermittlungsstellen und Telekommunikationsanlagen ohne Änderungen einsetzen. Trotzdem können die Teilnehmer die Vorteile des erfindungsgemäßen Verfahrens nutzen.

Bei einer nächsten Weiterbildung des erfindungsgemäßen Verfahrens wählt die Auswahlfunktion die Reaktionsmöglichkeiten gemäß einer zufälligen Reihenfolge aus. Beispielsweise wird eine Zufallsfunktion genutzt, die einen sogenannten Rauschgenerator zum Erzeugen von weißem Rauschen enthält. Jedoch gibt es auch Zufallsfunktionen, die eine Zufallszahl auf andere Weise ermitteln, beispielsweise abhängig von einer Systemzeit. Die Zufallszahl lässt sich dann zum Auswählen einer Reaktionsmöglichkeit nutzen. Zufallsfunktionen lassen sich im Gegensatz zu sogenannten deterministischen Funktionen nicht durch einen eindeutigen Zusammenhang zwischen einer Eingangsgröße und einer Ausgangsgröße beschreiben.

Die Erfindung betrifft in einem weiteren Aspekt eine Vorrichtung zum Betreiben eines Teilnehmeranschlusses, insbesondere eine Vermittlungsstelle, eine Telekommunikationsanlage oder ein Endgerät, bei deren Betrieb das erfindungsgemäße Verfahren oder eine seiner Weiterbildungen ausgeführt wird. Somit gelten für diese Einheiten die oben genannten technischen Wirkungen ebenfalls. Eine Einheit enthält eine Speichereinrichtung zum Speichern der Reaktionsmöglichkeiten. Außerdem enthält eine Einheit eine Steuereinheit, die für die ankommenden Rufe die Reaktionsmöglichkeiten gemäß einer automatischen Auswahlfunktion auswählt. Durch die Einbeziehung der Auswahlfunktion wird wiederum eine Nutzung des Endgerätes durch den gerufenen Teilnehmer simuliert.

Bei einer Weiterbildung einer Einheit gibt es eine Betriebsart-Speichereinrichtung, in welcher die Betriebsart vermerkt wird, d.h. die Normalbetriebsart oder die Simulationsbetriebsart. Die Steuereinheit bearbeitet die ankommenden Rufe abhängig von der vermerkten Betriebsart. Ein Umschalten von der einen Betriebsart in die andere Betriebsart ist so auf einfache Art und Weise möglich. Insbesondere lässt sich dieselbe Einheit zum Erbringen der Funktionen in beiden Betriebsarten einsetzen.

Die Erfindung betrifft außerdem ein Programm oder eine Speichereinheit mit einem Programm. Das Programm enthält eine Befehlsfolge, bei deren Ausführung durch einen Prozessor das erfindungsgemäße Verfahren oder eine seiner Weiterbildungen ausgeführt wird. Die oben genannten technischen Wirkungen gelten also auch für das Programm bzw. die Speichereinheit.

Im Folgenden werden Ausführungsbeispiele der Erfindung an Hand der beiliegenden Zeichnungen erläutert. Darin zeigen:
- Figur 1: ein Telekommunikationsnetz mit einer Simulations- funktion, die in einer Vermittlungsstelle enthalten ist,
- Figur 2: Verfahrensschritte zur Simulation der Anwesenheit eines Teilnehmers unter Nutzung der Simulations- funktion, und
- Figur 3: ein Endgerät mit einer Simulationsfunktion.

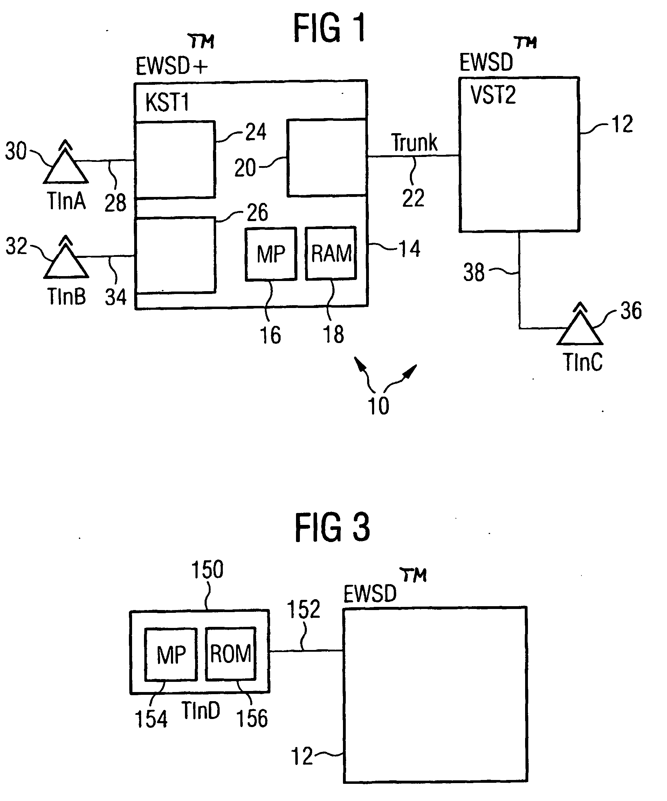

Figur 1 zeigt ein Telekommunikationsnetz 10, z.B. das Telekommunikationsnetz der Deutschen Telekom AG. In Figur 1 sind zwei Vermittlungsstellen 12, 14 vom Typ EWSD (elektronisch gesteuertes digitales Wählsystem - eingetragener Markename der Firma Siemens AG) dargestellt. Die Vermittlungsstelle 12 ist eine herkömmliche Vermittlungsstelle. Die Vermittlungsstelle 14 wurde um eine Simulationsfunktion erweitert, welche verhindert, dass die Abwesenheit eines Teilnehmers TlnA von anderen Teilnehmern TlnB und TlnC über das Telekommunikationsnetz 10 festgestellt werden kann. Diese Simulationsfunktion wird weiter unten näher erläutert.

Bis auf die zusätzliche Simulationsfunktion sind die Vermittlungsstellen 12 und 14 gleich aufgebaut, so dass im Folgenden nur der Aufbau der Vermittlungsstelle 14 erläutert wird. Die Vermittlungsstelle 14 enthält einen zentralen Prozessor 16, mit dessen Hilfe zentrale Steuerungsaufgaben ausgeführt werden. In einem Arbeitsspeicher 18 sind Befehle eines Steuerungsprogramms gespeichert. Die Befehle werden durch den Prozessor 16 ausgeführt. Der Arbeitsspeicher 18 ist beispielsweise ein flüchtiger Speicher, z.B. ein RAM (Random Access Memory). Eine Anschlusseinheit 20 der Vermittlungsstelle 14 dient zum Anschluss von Verbindungsleitungen, die zu anderen Vermittlungsstellen führen, siehe z.B. die Verbindungsleitung 22 zwischen den Vermittlungsstellen 12 und 14. Die Verbindungsleitung 22 wird auch als Trunk bezeichnet.

Zum Anschluss von Teilnehmerleitungen enthält die Vermittlungsstelle 14 mehrere Teilnehmer-Anschlussbaugruppen, von denen in Figur 1 zwei Teilnehmer-Anschlussbaugruppen 24 und 26 dargestellt sind. An die Anschlussbaugruppe 24 werden beispielsweise ISDN-Teilnehmer (Integrated Services Digital Network) angeschlossen, siehe z.B. die zum Teilnehmer TlnA führende Anschlussleitung 28. Der Teilnehmer TlnA hat ein Endgerät 30, das an die Teilnehmer-Anschlussleitung 28 angeschlossen ist. Das Endgerät 30 ist beispielsweise ein herkömmliches ISDN-Telefon.

Die Anschlussbaugruppe 26 dient zum Anschluss von Teilnehmern, die analoge Endgeräte benutzen. So benutzt der Teilnehmer TlnB ein analoges Telefon 32, das über eine Teilnehmer-Anschlussleitung 34 mit der Anschlussbaugruppe 26 verbunden ist.

Die Vermittlungsstelle 14 enthält außerdem weitere Baueinheiten, die jedoch nicht dargestellt sind. Insbesondere enthält die Vermittlungsstelle 14 ein Koppelnetz zum Aufbau von Sprachverbindungen und zum Austausch von Signalisierungsnachrichten zwischen den Anschlussbaugruppen 24, 26 sowie der Anschlusseinheit 20.

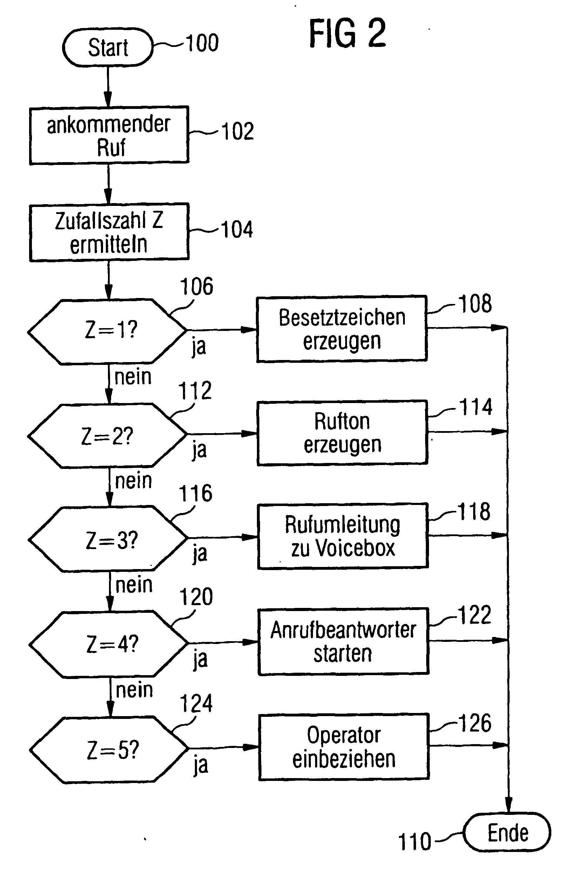

Der Teilnehmer TlnC benutzt ein Endgerät 36, das über eine Teilnehmer-Anschlussleitung 38 mit der Vermittlungsstelle 12 verbunden ist. Zur Erläuterung des Ausführungsbeispiels sei angenommen, dass der Teilnehmer TlnA für vier Wochen verreist ist und deshalb bei dem Netzbetreiber des Telekommunikationsnetzes 10 das Leistungsmerkmal "Simulationsbetriebsart" angemeldet hat. Der Netzbetreiber hat daraufhin die Simulationsbetriebsart am Teilnehmeranschluss des Teilnehmers TlnA für die Zeit aktiviert, in welcher der Teilnehmer TlnA verreist ist. Die Funktion "Simulationsbetriebsart" wird von der Vermittlungsstelle 14 erbracht. Die dabei ausgeführten Verfahrensschritte werden unten an Hand der Figur 2 näher erläutert.

Es sei angenommen, dass der Teilnehmer TlnC gewerbsmäßig feststellt, welche Teilnehmer Tln längere Zeit abwesend sind. Dazu wählt er der Reihe nach die Rufnummern einer Rufnummernliste mehrmals an, und registriert, ob abgehoben wird oder nicht. Die Rufnummernliste ist beispielsweise eine Seite eines Telefonbuches, auf der auch die Rufnummer des Teilnehmers TlnA aufgelistet ist. Sobald ein vom Teilnehmer TlnC kommender Ruf für den Teilnehmeranschluss des Teilnehmers TlnA an der Vermittlungsstelle 14 ankommt, werden die unten an Hand der Figur 2 erläuterten Verfahrensschritte ausgeführt, um dem Teilnehmer TlnC die Anwesenheit des Teilnehmers TlnA während der Simulationsbetriebsart vorzutäuschen.

Figur 2 zeigt Verfahrensschritte zur Simulation der Anwesenheit des Teilnehmers TlnA unter Nutzung einer Zufallsfunktion. Das Verfahren beginnt in einem Verfahrensschritt 100. In einem dem Verfahrensschritt 100 folgenden Verfahrensschritt 102 kommt in der Vermittlungsstelle 14 ein Ruf des Teilnehmers TlnC an. Die den Prozessor 16 enthaltene Steuereinheit der Vermittlungsstelle 14 erkennt an Hand der Zielrufnummer, dass eine Verbindung zu dem Endgerät 30 des Teilnehmers TlnA aufgebaut werden soll. An Hand eines Vermerks für die Zielrufnummer stellt die Vermittlungsstelle 14 fest, dass für den Teilnehmer TlnA die Simulationsbetriebart aktiviert ist. Deshalb wird der ankommende Ruf 102 nicht wie üblich zum Endgerät 30 durchgeschaltet, sondern nach dem Verfahrensschritt 102 folgt unmittelbar ein Verfahrensschritt 104.

Im Verfahrensschritt 104 wird mit Hilfe einer Zufallsfunktion eine Zufallszahl ermittelt, die im Bereich von 1 bis 5 liegt. Die Zufallszahl ist dabei eine ganze Zahl. Zum Ermitteln der Zufallszahl Z wird beispielsweise die Systemzeit einer in der Vermittlungsstelle 14 enthaltenen Systemuhr genutzt.

Nach dem Verfahrensschritt 104 folgt ein Verfahrensschritt 106, in welchem geprüft wird, ob die im Verfahrensschritt 104 ermittelte Zufallszahl Z den Wert Eins hat. Hat die Zufallszahl Z den Wert Eins, so folgt dem Verfahrensschritt 106 unmittelbar ein Verfahrensschritt 108. Im Verfahrensschritt 108 veranlasst die den Prozessor 16 enthaltende Steuereinheit der Vermittlungsstelle 14, dass zum Teilnehmer TlnC hin ein Besetztzeichen erzeugt wird, obwohl das Endgerät 30 tatsächlich nicht belegt ist. Nach dem Verfahrensschritt 108 wird das Verfahren in einem Verfahrensschritt 110 beendet, bis der nächste Ruf eintrifft.

Wird im Verfahrensschritt 106 jedoch festgestellt, dass die Zufallszahl Z nicht den Wert Eins hat, so folgt unmittelbar nach dem Verfahrensschritt 106 ein Verfahrensschritt 112. Im Verfahrensschritt 112 wird geprüft, ob die Zufallszahl Z den Wert Zwei hat. Hat die Zufallszahl Z den Wert Zwei, so folgt unmittelbar nach dem Verfahrensschritt 112 ein Verfahrensschritt 114. Im Verfahrensschritt 114 veranlasst die Vermittlungsstelle 14, dass zur Seite des Teilnehmers TlnC hin ein Rufton erzeugt wird. Zur Seite des Endgerätes 30 hin werden jedoch keine Signalisierungsnachrichten gesendet. Nach dem Verfahrensschritt 114 wird das Verfahren wiederum im Verfahrensschritt 110 bis zum Eintreffen des nächsten Rufes am Teilnehmeranschluss des Teilnehmers TlnA beendet, beispielsweise dadurch, dass der Teilnehmer TlnC auflegt.

Wird im Verfahrensschritt 112 dagegen festgestellt, dass die Zufallszahl Z nicht den Wert Zwei hat, so folgt unmittelbar nach dem Verfahrensschritt 112 ein Verfahrensschritt 116. Im Verfahrensschritt 116 wird überprüft, ob die Zufallszahl Z den Wert Drei hat. Ist dies der Fall, so folgt unmittelbar nach dem Verfahrensschritt 116 ein Verfahrensschritt 118. Im Verfahrensschritt 118 wird der vom Teilnehmer TlnC ankommende Ruf zu einer sogenannten Voicebox des Teilnehmers TlnA umgeleitet, die in der Vermittlungsstelle 14 enthalten ist und einen Speicherbereich in einer nicht dargestellten Speichereinheit belegt. Nach dem Verfahrensschritt 118 wird das Verfahren im Verfahrensschritt 110 beendet, beispielsweise dadurch, dass der Teilnehmer TlnC auflegt.

Wird im Verfahrensschritt 116 dagegen festgestellt, dass die Zufallszahl Z nicht den Wert Drei hat, so folgt unmittelbar nach dem Verfahrensschritt 116 ein Verfahrensschritt 120. Im Verfahrensschritt 120 wird geprüft, ob die Zufallszahl Z den Wert Vier hat. Ist dies der Fall, so folgt unmittelbar nach dem Verfahrensschritt 120 ein Verfahrensschritt 122. Im Verfahrensschritt 122 wird ein sich im Endgerät 30 befindender Anrufbeantworter gestartet. Der Teilnehmer TlnC hat nun die Möglichkeit, eine Nachricht auf diesen Anrufbeantworter zu sprechen. Anschließend wird das Verfahren im Verfahrensschritt 110 beendet.

Wird dagegen im Verfahrensschritt 120 festgestellt, dass die Zufallszahl Z nicht den Wert Vier hat, so folgt dem Verfahrensschritt 120 unmittelbar ein Verfahrensschritt 124. Im Verfahrensschritt 124 wird geprüft, ob die Zufallszahl Z den Wert Fünf hat. Hat die Zufallszahl Z den Wert Fünf, so folgt dem Verfahrensschritt 124 ein Verfahrensschritt 126. Im Verfahrensschritt 126 wird für den vom Teilnehmer TlnC kommenden Ruf eine Verbindung zu dem Endgerät eines Operators aufgebaut, der vom Betreiber des Telekommunikationsnetzes 10 eingesetzt worden ist. Der Operator meldet sich unverbindlich mit "Hallo". Nach dem Verfahrensschritt 126 wird das Verfahren im Verfahrensschritt 110 beendet, beispielsweise dadurch, dass der Teilnehmer TlnC auflegt.

Probiert der Teilnehmer TlnC nach einigen Stunden oder Tagen den Teilnehmer TlnA erneut anzurufen, so wird das Verfahren erneut durchgeführt. Aufgrund des Verwendens der Zufallszahl Z wird immer eine der Reaktionsmöglichkeiten 108, 114, 118, 122 bzw. 126 in zufälliger und damit nicht vorhersagbarer Weise ausgewählt. Für den Teilnehmer TlnC ist es somit sehr schwierig, festzustellen, ob der Teilnehmer TlnA anwesend ist oder ob dessen Anwesenheit durch die Simulationsbetriebsart nur simuliert wird.

Das in Figur 2 dargestellte Flussdiagramm ist nur eine Realisierungsmöglichkeit für die Abfolge der Verfahrensschritte. So wird bei einem anderen Ausführungsbeispiel eine einzige Verzweigung an Stelle der Verzweigungen 106, 112, 116, 120 und 124 verwendet. Auch wird die Abfrage im Verfahrensschritt 124 bei einem weiteren Ausführungsbeispiel weggelassen.

Figur 3 zeigt ein Endgerät 150 eines Teilnehmers TlnD. Das Endgerät 150 ist über eine Teilnehmer-Anschlussleitung 152 an die herkömmliche Vermittlungsstelle 12 angeschlossen. Jedoch hat das Endgerät 150 einen Aufbau, durch den gewährleistet ist, dass die an Hand der Figur 2 erläuterten Verfahrensschritte durch das Endgerät 150 ausgeführt werden können. So enthält das Endgerät 150 einen Mikroprozessor 154 und eine nichtflüchtige Speichereinheit 156, z.B. ein ROM (Read Only Memory). Am Endgerät 150 lassen sich zwei Betriebsarten wählen, nämlich eine "Normalbetriebsart" und eine "Simulationsbetriebsart". Ist der Teilnehmer TlnD für längere Zeit nicht zu Hause, so aktiviert er die Betriebsart "Simulationsbetrieb". Damit werden am Endgerät 150 ankommende Rufe nach dem an Hand der Figur 2 erläuterten Verfahren bearbeitet.

Bei einem nächsten Ausführungsbeispiel werden an Stelle der über Leitungen angeschlossenen Endgeräte 30, 32, 36 und 150 mobile Endgeräte benutzt, die über Funkübertragungsstrecken an die Vermittlungsstelle 12 bzw. 14 angeschlossen sind.

## Patentansprüche

1. Verfahren zur Rufbearbeitung in einem Telekommunikationsnetz (10),
- bei dem für einen Teilnehmeranschluss (30) eines Teilnehmers (TlnA) eine sich von der Normalbetriebsart des Teilnehmeranschlusses (30) unterscheidende Simulationsbetriebsart ausgewählt wird und
- bei dem bei einem ankommenden Ruf aus mehreren Reaktionsmöglichkeiten (108, 114) eine Reaktionsmöglichkeit gemäß einer automatischen Auswahlfunktion (104) ausgewählt wird, um eine Nutzung des Teilnehmeranschlusses (30) durch den Teilnehmer (TlnA) zu simulieren,
**dadurch gekennzeichnet, dass** die automatische Auswahlfunktion aus folgenden Reaktionsmöglichkeiten auswählt:
- dass eine Reaktionsmöglichkeit (108) das Erzeugen eines Besetzttones ist, der dem rufenden Teilnehmer (TlnC) signalisiert, dass ein am Teilnehmeranschluss angeschlossenes Endgerät (30) bereits eine Telekommunikationsverbindung nutzt,
- dass eine Reaktionsmöglichkeit (114) das Erzeugen eines Ruftones ist, der dem rufenden Teilnehmer (TlnC) signalisiert, dass der gerufene Teilnehmer (TlnA) über eine Signaleinrichtung gerufen wird,
- dass eine Reaktionsmöglichkeit (118) das Umleiten des ankommenden Rufes zu einem anderen Teilnehmeranschluss ist,
- dass eine Reaktionsmöglichkeit (126) das Umleiten des ankommenden Rufes zu einem Endgerät ist, das zum Erbringen der Simulationsbetriebsart für mehrere Teilnehmeranschlüsse genutzt wird.

2. Verfahren nach Anspruch 1, **dadurch gekennzeichnet, dass** die Auswahlfunktion (104) aufgrund der tatsächlichen Nutzung des Endgerätes (30) durch den Teilnehmer (TlnA) festgelegt wird, und dass sich die Auswahlfunktionen (104) für verschiedene Teilnehmer (TlnA, TlnB) voneinander unterscheiden.

3. Verfahren nach einem der vorhergehenden Ansprüche, **dadurch gekennzeichnet, dass** das Verfahren in einer Vermittlungsstelle (14), in einer Telekommunikationsanlage oder in dem Endgerät (150) des Teilnehmers (TlnA) durchgeführt wird.

4. Verfahren nach einem der vorhergehenden Ansprüche, **dadurch gekennzeichnet, dass** die Auswahlfunktion (104) die Reaktionsmöglichkeiten (108, 114) gemäß einer zufälligen Reihenfolge auswählt.

5. Vorrichtung zur Rufbearbeitung in einem Telekommunikationsnetz,
- mit einer Reaktionsmöglichkeiten-Speichereinrichtung zum Vermerken mehrerer vermittlungstechnischer Reaktionsmöglichkeiten (108, 114) bei an einem Teilnehmeranschluss eines Teilnehmers (TlnA) ankommenden Rufen,
- und mit einer Steuereinheit (16, 18), die für die ankommenden Rufe aus den Reaktionsmöglichkeiten (108, 114) eine Reaktionsmöglichkeit gemäß einer automatischen Auswahlfunktion (104) auswählt, wobei die Steuereinheit aufgrund der Einbeziehung der Auswahlfunktion (104) eine Nutzung des Endgerätes (30) durch den gerufenen Teilnehmer (TlnA) simuliert
**dadurch gekennzeichnet, dass** die automatische Auswahlfunktion aus folgenden Reaktionsmöglichkeiten auswählt:
- dass eine Reaktionsmöglichkeit (108) das Erzeugen eines Besetzttones ist, der dem rufenden Teilnehmer (TlnC) signalisiert, dass ein am Teilnehmeranschluss angeschlossenes Endgerät (30) bereits eine Telekommunikationsverbindung nutzt,
- dass eine Reaktionsmöglichkeit (114) das Erzeugen eines Ruftones ist, der dem rufenden Teilnehmer (TlnC) signalisiert, dass der gerufene Teilnehmer (TlnA) über eine Signaleinrichtung gerufen wird,
- dass eine Reaktionsmöglichkeit (118) das Umleiten des ankommenden Rufes zu einem anderen Teilnehmeranschluss ist,
- dass eine Reaktionsmöglichkeit (126) das Umleiten des ankommenden Rufes zu einem Endgerät ist, das zum Erbringen der Simulationsbetriebsart für mehrere Teilnehmeranschlüsse genutzt wird.

6. Vorrichtung, Vermittlungsstelle (14), Telekommunikationsanlage oder Endgerät (150) nach Anspruch 5, **dadurch gekennzeichnet** eine Betriebsart-Speichereinrichtung zum Vermerken einer sich von der Normalbetriebsart des Teilnehmeranschlusses (30) unterscheidenden Simulationsbetriebsart, wobei die Steuereinheit (16, 18) ankommende Rufe abhängig von der vermerkten Betriebsart bearbeitet.

7. Vorrichtung, Vermittlungsstelle (14), Telekommunikationsanlage oder Endgerät (150) nach Anspruch 5 oder 6, **dadurch gekennzeichnet, dass** die Steuereinheit so aufgebaut ist, dass bei ihrem Betrieb ein Verfahren nach einem der Ansprüche 1 bis 4 ausgeführt wird.

8. Programm oder Speichereinheit (18, 156) mit Programm, wobei das Programm eine Befehlsfolge enthält, bei deren Ausführung durch einen Prozessor (16, 154) ein Verfahren nach einem der Ansprüche 1 bis 4 ausgeführt wird.

## Claims

1. Method for call processing in a telecommunications network (10),
- in which, for a subscriber connection (30) of a subscriber (TlnA), a simulation operating mode which differs from the normal operating mode of the subscriber connection (30) is selected, and
- in which, in the event of an incoming call, one response option from a plurality of response options (108, 114) is selected according to an automatic selection function (104), in order to simulate a use of the subscriber connection (30) by the subscriber (TlnA), **characterized in that** the automatic selection function selects from the following response options:
- that one response option (108) entails the generation of a busy tone which signals to the calling subscriber (TlnC) that a terminal device (30) connected to the subscriber connection is already using a telecommunications connection,
- that one response option (114) entails the generation of a ringing tone which signals to the calling subscriber (TlnC) that the called subscriber (TlnA) is being called via a signalling device,
- that one response option (118) entails the diversion of the incoming call to a different subscriber connection,
- that one response option (126) entails the diversion of the incoming call to a terminal device which is used to provide the simulation operating mode for a plurality of subscriber connections.

2. Method according to Claim 1, **characterized in that** the selection function (104) is determined by the subscriber (TlnA) on the basis of the actual use of the terminal device (30), and that the selection functions (104) differ from one another for different subscribers (TlnA, TlnB).

3. Method according to one of the preceding claims, **characterized in that** the method is carried out in a switching centre (14), in a PBX system or in the terminal device (150) of the subscriber (TlnA).

4. Method according to one of the preceding claims, **characterized in that** the selection function (104) selects the response options (108, 114) according to a random sequence.

5. Device for call processing in a telecommunications network,
- with a response option memory device to store a plurality of switching response options (108, 114) in the event of incoming calls on a subscriber connection of a subscriber (TlnA),
- and with a control unit (16, 18) which, for the incoming calls, selects one of the response options (108, 114) according to an automatic selection function (104), whereby the control unit simulates a use of the terminal device (30) by the called subscriber (TlnA) on the basis of the incorporation of the selection function (104), **characterized in that** the automatic selection function selects from the following response options:
- that one response option (108) entails the generation of a busy tone which signals to the calling subscriber (TlnC) that a terminal device (30) connected to the subscriber connection is already using a telecommunications connection,
- that one response option (114) entails the generation of a ringing tone which signals to the calling subscriber (TlnC) that the called subscriber (TlnA) is being called via a signalling device,
- that one response option (118) entails the diversion of the incoming call to a different subscriber connection, that one response option (126) entails the diversion of the incoming call to a terminal device which is used to provide the simulation operating mode for a plurality of subscriber connections.

6. Device, switching centre (14), PBX system or terminal device (150) according to Claim 5, **characterized by** an operating mode memory device to store a simulation operating mode which differs from the normal operating mode of the subscriber connection (30), whereby the control unit (16, 18) processes incoming calls depending on the stored operating mode.

7. Device, switching centre (14), PBX system or terminal device (150) according to Claim 5 or 6, **characterized in that** the control unit is structured in such a way that a method according to one of Claims 1 to 4 is carried out during its operation.

8. Program or memory unit (18, 156) with a program, whereby the program contains a command string, during the execution of which a method according to one of Claims 1 to 4 is carried out by a processor (16, 154).

## Revendications

1. Procédé pour le traitement d'appels dans un réseau de télécommunication (10),
- dans lequel un mode de fonctionnement par simulation se différenciant du mode de fonctionnement normal du branchement d'abonné (30) est sélectionné pour un branchement d'abonné (30) d'un abonné (TlnA) et
- dans lequel, lors d'un appel entrant, une possibilité de réaction selon une fonction de sélection automatique (104) est sélectionnée à partir de plusieurs possibilités de réaction (108, 114) afin de simuler une utilisation du branchement d'abonné (30) par l'abonné (TlnA),
**caractérisé en ce que** la fonction de sélection automatique sélectionne à partir des possibilités de réaction suivantes :
- qu'une possibilité de réaction (108) est de générer un signal d'occupation qui signale à l'abonné appelant (TlnC) qu'un terminal (30) raccordé à un branchement d'abonné utilise déjà une liaison de communication,
- qu'une possibilité de réaction (114) est de générer une tonalité d'appel qui signale à l'abonné appelant (TlnC) que l'abonné appelé (TlnA) est appelé par l'intermédiaire d'un dispositif de signalisation,
- qu'une possibilité de réaction (118) est de renvoyer l'appel entrant vers un autre branchement d'abonné,
- qu'une possibilité de réaction (126) est de renvoyer l'appel entrant vers un terminal qui est utilisé pour fournir le mode de fonctionnement par simulation pour plusieurs branchements d'abonnés.

2. Procédé selon la revendication 1, **caractérisé en ce que** la fonction de sélection (104) est déterminée en raison de l'utilisation effective du terminal (30) par l'abonné (TlnA) et **en ce que** les fonctions de sélection (104) se différencient les unes des autres pour différents abonnés (TlnA, TlnB).

3. Procédé selon l'une quelconque des revendications précédentes, **caractérisé en ce que** le procédé est réalisé dans un central de commutation (14), dans une installation de télécommunication ou dans le terminal (150) de l'abonné (TlnA).

4. Procédé selon l'une quelconque des revendications précédentes, **caractérisé en ce que** la fonction de sélection (104) sélectionne les possibilités de réaction (108, 114) selon un ordre aléatoire.

5. Dispositif pour le traitement d'appels dans un réseau de télécommunication,
- comprenant un dispositif de mémorisation de possibilités de réaction pour noter plusieurs possibilités de réaction (108, 114) relevant de la technique de commutation en cas d'appels entrant sur un branchement d'abonné d'un abonné (TlnA),
- et comprenant une unité de commande (16, 18) qui, à partir des possibilités de réaction (108, 114), sélectionne pour les appels entrant une possibilité de réaction selon une fonction de sélection automatique (104), l'unité de commande simulant une utilisation du terminal (30) par l'abonné appelé (TlnA) en raison de la prise en compte de la fonction de sélection (104)
**caractérisé en ce que** la fonction de sélection automatique sélectionne à partir des possibilités de réaction suivantes :
- qu'une possibilité de réaction (108) est de générer un signal d'occupation qui signale à l'abonné appelant (TlnC) qu'un terminal (30) raccordé à un branchement d'abonné utilise déjà une liaison de communication,
- qu'une possibilité de réaction (114) est de générer une tonalité d'appel qui signale à l'abonné appelant (TlnC) que l'abonné appelé (TlnA) est appelé par l'intermédiaire d'un dispositif de signalisation,
- qu'une possibilité de réaction (118) est de renvoyer l'appel entrant vers un autre branchement d'abonné,
- qu'une possibilité de réaction (126) est de renvoyer l'appel entrant vers un terminal qui est utilisé pour fournir le mode de fonctionnement par simulation pour plusieurs branchements d'abonnés.

6. Dispositif, central de commutation (14), installation de télécommunication ou terminal (150) selon la revendication 5, **caractérisé par** un dispositif de mémorisation du mode de fonctionnement pour noter un mode de fonctionnement par simulation se différenciant du mode de fonctionnement normal du branchement d'abonné (30), l'unité de commande (16, 18) traitant des appels entrant en fonction du mode de fonctionnement noté.

7. Dispositif, central de commutation (14), installation de télécommunication ou terminal (150) selon la revendication 5 ou 6, **caractérisé en ce que** l'unité de commande est structurée de telle manière que lors de son fonctionnement un procédé selon l'une quelconque des revendications 1 à 4 est exécuté.

8. Programme ou unité de mémoire (18, 156) avec programme, le programme comprenant une séquence d'instructions, lors de l'exécution desquelles par un processeur (16, 154) un procédé selon l'une quelconque des revendications 1 à 4 est exécuté.
